(19) Europäisches Patentamt
European Patent Office
Office européen des brevets

(11) **EP 1 957 768 B1**

(12) **FASCICULE DE BREVET EUROPEEN**

(45) Date de publication et mention de la délivrance du brevet:
**13.10.2010 Bulletin 2010/41**

(51) Int Cl.:
*F01N 3/08* (2006.01)    *F01N 11/00* (2006.01)
*F02D 41/02* (2006.01)

(21) Numéro de dépôt: **06831328.7**

(22) Date de dépôt: **14.11.2006**

(86) Numéro de dépôt international:
**PCT/FR2006/051166**

(87) Numéro de publication internationale:
**WO 2007/060351 (31.05.2007 Gazette 2007/22)**

(54) **SYSTEME DE REGENERATION PERIODIQUE D'UN DISPOSITIF DE PIEGEAGE CATALYTIQUE D'OXYDES D'AZOTE**

SYSTEM ZUR REGELMÄßIGEN REGENERATION EINER STICKSTOFFOXID-KATALYSIERENDEN FALLENVORRICHTUNG

SYSTEM FOR PERIODIC REGENERATION OF A NITROGEN OXIDE CATALYTIC TRAPPING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.11.2005  FR 0512026**

(43) Date de publication de la demande:
**20.08.2008  Bulletin 2008/34**

(73) Titulaire: **RENAULT S.A.S.**
**92100 Boulogne Billancourt (FR)**

(72) Inventeurs:
- **GAUVIN, Fabrice**
  **F-91540 Mennecy (FR)**
- **BARRILLON, Pascal**
  **F-92130 Issy les Moulineaux (FR)**
- **POILANE, Emmanuel**
  **F-91290 Arpajon (FR)**

(56) Documents cités:
EP-A- 1 302 647    EP-A- 1 426 572
EP-A- 1 503 053    FR-A- 2 840 957

**Description**

La présente invention concerne un système et un procédé de régénération périodique d'un dispositif de piégeage catalytique d'oxydes d'azote $NO_x$, comprenant une phase catalytique, et traversé par les gaz d'échappement d'un moteur à combustion interne de véhicule automobile.

Les moteurs à combustion interne produisent des gaz d'échappement qui contiennent des substances polluantes réglementées, telles que les oxydes d'azote $NO_x$, les hydrocarbures imbrûlés HC, le monoxyde de carbone CO et les particules qu'il est nécessaire de traiter.

Les seuils admis pour les émissions de gaz polluants des véhicules automobiles sont régulièrement revus à la baisse dans le cadre de l'évolution de réglementation sur la dépollution.

De manière classique, les oxydes d'azote émis par le moteur dans les gaz d'échappement, sont traités par un piège à oxydes d'azote implanté dans la ligne d'échappement du moteur.

Dans les conditions normales de fonctionnement en mélange pauvre en carburant du moteur, c'est-à-dire lorsque la richesse en carburant des gaz à l'échappement est faible, le piège à oxydes d'azote stocke les oxydes d'azote sous forme de nitrates sur des sites d'adsorption, par exemple des oxydes de baryum.

La capacité de stockage d'un tel piège étant limitée, il est nécessaire de régénérer le piège régulièrement par fonctionnement en mélange riche en carburant, en élevant la richesse en carburant des gaz à l'échappement par contrôle moteur, à une valeur très légèrement supérieure à un.

Dans de telles conditions, les oxydes d'azote $NO_x$ sont désorbés des sites de stockage et éliminés sous forme d'azote par un catalyseur.

Il est nécessaire de bien gérer les phases de stockage et les phases de régénération du dispositif de piégeage catalytique.

En effet, lorsque le dispositif de piégeage catalytique est saturé en oxydes d'azote adsorbés, les gaz d'échappement rejetés contiennent une quantité d'oxydes d'azote supérieure aux normes autorisées.

Le document FR 2 856 741 (RENAULT) porte sur un système et un procédé d'estimation d'une masse d'oxydes d'azote stockée dans un dispositif de piégeage catalytique d'oxydes d'azote, comprenant une phase catalytique, et traversé par les gaz d'échappement d'un moteur à combustion interne de véhicule automobile. L'estimation de la masse d'oxydes d'azote stockée dans le dispositif de piégeage catalytique est effectuée par combinaison d'un modèle thermique et d'un modèle d'adsorption.

Le document EP-A-503 053 (NISSAN) porte sur la régénération d'un dispositif de piégeage catalytique des oxydes d'azote. Le document EP 1 503 053 décrit les caractéristiques des préambules des revendications 1 et 5.

Un but de l'invention est d'améliorer la précision de l'estimation de la quantité d'oxydes d'azote stockée dans le dispositif de piégeage catalytique.

Aussi, selon un aspect de l'invention, il est proposé un système de régénération périodique d'un dispositif de piégeage, catalytique d'oxydes d'azote, comprenant une phase catalytique, et traversé par les gaz d'échappement d'un moteur à combustion interne de véhicule automobile. Le système comprend une unité de commande électronique pourvue de moyens d'estimation de la quantité instantanée d'oxydes d'azote piégée dans ladite phase catalytique lors du fonctionnement du moteur en mélange pauvre en carburant. En outre, le système comprend une cartographie apte à déterminer une quantité instantanée d'oxydes d'azote éliminée de ladite phase catalytique, par désorption, lors du fonctionnement du moteur en mélange pauvre en carburant, et évacuée dans les gaz d'échappement du véhicule.

Le système de régénération périodique du dispositif de piégeage catalytique fonctionne avec une précision améliorée, et ainsi améliore l'efficacité de fonctionnement d'un tel système.

En outre, cette amélioration a un surcoût très faible, car elle ne nécessite pas l'utilisation de capteurs supplémentaires.

Dans un mode de réalisation, ladite cartographie comprend des paramètres d'entrée comprenant la température dans le dispositif de piégeage catalytique et le débit de gaz traversant le dispositif de piégeage catalytique.

Ces deux paramètres permettent de prendre en compte le phénomène de désorption des oxydes d'azote avec une précision améliorée.

Avantageusement, lesdits paramètres d'entrée de ladite cartographie comprennent, en outre, des informations représentatives de l'empoisonnement au soufre et du vieillissement du dispositif catalytique.

Ces paramètres supplémentaires permettent d'améliorer la précision de l'estimation de la quantité instantanée d'oxydes d'azote éliminée de ladite phase catalytique par désorption.

Dans un mode de réalisation préféré, le système comprend un soustracteur adapté pour soustraire ladite quantité instantanée déterminée d'oxydes d'azote éliminée de ladite phase catalytique par désorption, de la quantité instantanée estimée d'oxydes d'azote piégée dans ladite phase catalytique.

Selon un autre aspect de l'invention, il est également proposé un procédé de régénération périodique d'un dispositif de piégeage catalytique d'oxydes d'azote comprenant une phase catalytique et traversé par les gaz d'échappement d'un moteur à combustion interne de véhicule automobile. On estime la quantité instantanée d'oxydes d'azote piégée dans ladite phase catalytique lors du fonctionnement du moteur en mélange pauvre en carburant. On utilise une cartographie pour déterminer une quantité instantanée d'oxydes d'azote éliminée de ladite phase catalytique, par désorption, lors du fonctionnement du moteur en mélange pauvre en carburant, et évacuée dans les gaz d'échappement du véhicule.

Avantageusement, ladite cartographie comprend des paramètres d'entrée comprenant la température dans le dispositif de piégeage catalytique et le débit de gaz traversant le dispositif de piégeage catalytique.

En outre, lesdits paramètres d'entrée de ladite cartographie comprennent des informations représentatives de l'empoisonnement du soufre et du vieillissement du dispositif catalytique.

Dans un mode de mise en oeuvre, on soustrait ladite quantité instantanée déterminée d'oxydes d'azote éliminée de ladite phase catalytique par désorption, de la quantité instantanée estimée d'oxydes d'azote piégée dans ladite phase catalytique.

D'autres buts, caractéristiques et avantages de l'invention apparaîtront à la lecture de la description suivante, de quelques exemples nullement limitatifs, et faite en référence aux dessins annexés, sur lesquels :

- la figure 1 est un schéma synoptique d'un système selon un aspect de l'invention ;
- la figure 2 est une représentation détaillée du système de la figure 1 ; et
- la figure 3 représente les quantités instantanées d'oxydes d'azote calculée et maximale stockées dan le dispositif de piégeage catalytique.

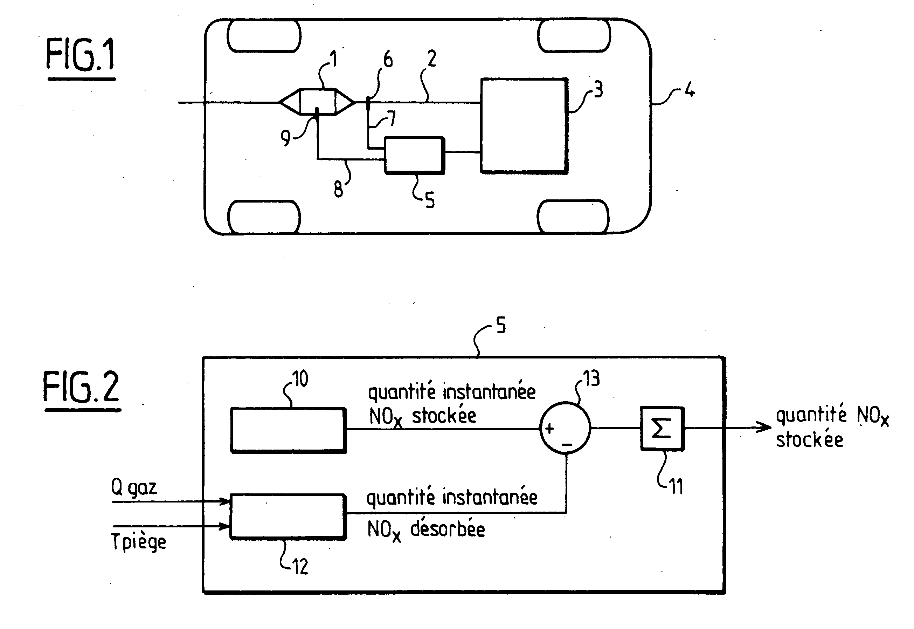

Sur la figure 1, on a représenté l'architecture générale d'un système de régénération périodique d'un dispositif de piégeage catalytique 1 d'oxydes d'azote comprenant une phase catalytique, et traversé par les gaz d'échappement 2 d'un moteur 3 à combustion interne de véhicule automobile 4. Dispositif catalytique est alimenté en gaz d'échappement comprenant une richesse faible en carburant, propre au fonctionnement en mélange pauvre en carburant. Le véhicule 4 comprend une unité de commande électronique 5 connectée avec le moteur 3, ainsi qu'avec de nombreux éléments du véhicule 4, non représentés.

En particulier, l'unité de commande électronique 5 est capable de commander le fonctionnement du moteur en mésange riche en carburant lors de phases de régénération périodiques du dispositif de piégeage catalytique 1.

L'unité de commande électronique 5 est connectée à un capteur de débit de gaz 6 disposé en amont du dispositif de piégeage catalytique 1 dans la ligne d'échappement 2, par une connexion 7.

En outre, l'unité de commande électronique 5 est reliée par une connexion 8 à un capteur de température 9 dans le dispositif de piégeage catalytique 1. Le capteur de débit 6 transmet à l'unité de commande électronique 5 la valeur du débit de gaz traversant le dispositif de piégeage catalytique 1.

En variante, la quantité de gaz d'échappement traversant le dispositif de piégeage catalytique 1 peut être transmise par un estimateur de la quantité de gaz d'échappement du moteur 3 traversant le dispositif de piégeage catalytique 1.

La température dans le dispositif de piégeage catalytique 1 peut, en variante, être fournie par un estimateur de la température interne au dispositif de piégeage catalytique 1.

Le moteur 3 rejette des gaz d'échappement dans la ligne d'échappement 2. Ces gaz d'échappement traversent le dispositif de piégeage catalytique 1 qui stocke une partie des oxydes d'azote contenus dans les gaz d'échappement. Ces gaz sont ensuite rejetés dans l'atmosphère.

La figure 2 illustre plus en détail le fonctionnement du système de la figure 1.

Une estimation de la quantité instantanée d'oxydes d'azote piégée dans la phase catalytique du dispositif de piégeage catalytique 1 est calculée par un module d'estimation 10 de la quantité instantanée d'oxydes d'azote piégée dans la phase catalytique du dispositif de piégeage catalytique 1 et un module de sommation 11 pour sommer les quantités instantanées d'oxydes d'azote stockées et délivrer en sortie une quantité d'oxydes d'azote stockée dans la phase catalytique du dispositif de piégeage 1.

Ce calcul de la quantité instantanée d'oxydes d'azote stockée est effectué au moyen de méthodes d'estimations classiques.

En outre, une cartographie 12 permet de déterminer une quantité instantanée d'oxydes d'azote éliminée de ladite phase catalytique par désorption, lors du fonctionnement du moteur 3 en mélange pauvre en carburant.

La cartographie 12 comprend des paramètres d'entrée comprenant la température $T_{piège}$ dans le dispositif de piégeage catalytique 1, et le débit de gaz $Q_{gaz}$ dans le dispositif de piégeage catalytique 1.

Un soustracteur 13 permet de soustraire à la quantité instantanée d'oxydes d'azote stockés calculée par le module 10, la quantité instantanée d'oxydes d'azote désorbée fournie par la cartographie 12.

En effet, le dispositif de piégeage catalytique ne peut stocker au maximum qu'une quantité instantanée d'oxydes d'azote correspondant à une efficacité instantanée nulle. On entend par efficacité instantanée de stockage des oxydes d'azote le rapport de la quantité instantanée d'oxydes d'azote en sortie du dispositif de piégeage catalytique 1 et de la quantité instantanée d'oxydes d'azote en entrée du dispositif de piégeage catalytique 1.

L'efficacité instantanée de stockage des oxydes d'azote est représentative du taux d'occupation instantanée des sites destinés à stocker les oxydes d'azote.

Ainsi, lorsque l'efficacité instantanée vaut 100%, la quantité des sites disponibles pour stocker les .oxydes d'azote est totale.

Au contraire, l'efficacité de stockage des oxydes d'azote est nulle lorsqu'aucun de ces sites est disponible.

L'efficacité instantanée de stockage des oxydes d'azote, pour un débit constant de gaz traversant le dispositif de piégeage 1, dépend de la température de la phase catalytique.

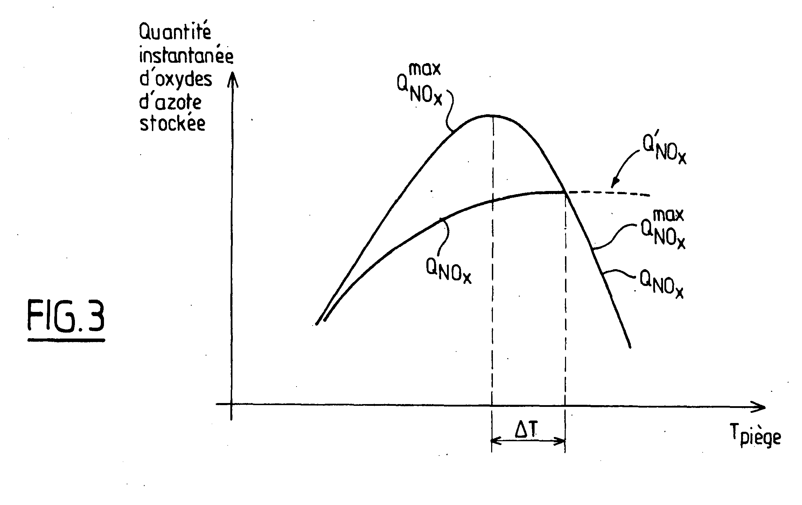

Lors d'un gradient $\Delta T$ de la température $T_{\text{piège}}$ dans le dispositif de piégeage 1, tel qu'illustré sur la figure 3, la quantité instantanée d'oxydes d'azote $Q_{NO_X}$ stockée dans le dispositif 1 pourrait devenir supérieure à la quantité instantanée maximale $Q_{NO_X}^{\max}$ stockable à cette température. Comme la phase catalytique est alors saturée, la différence est désorbée. Si on ne tient pas compte de cette quantité instantanée d'oxydes d'azote désorbée, la quantité d'oxyde d'azote est surestimée $Q_{NO_X}$.

Ainsi, l'estimation de la quantité instantanée d'oxydes d'azote stockée dans la phase catalytique a une précision améliorée, et la sommation temporelle de cette quantité instantanée d'oxydes d'azote stockée dans la phase catalytique, calculée par le module de sommation 11, a une précision améliorée.

L'invention permet ainsi de mieux gérer le déclenchement des phases de régénération du dispositif de piégeage catalytique, d'optimiser sa régénération et son fonctionnement, et ainsi d'obtenir une meilleure efficacité de traitement des oxydes d'azote.

En variante, les paramètres d'entrée de la cartographie 12 peuvent comprendre, en outre, des informations représentatives de l'empoisonnement au soufre et du vieillissement du dispositif catalytique, ce qui permet d'améliorer la précision de l'estimation de la quantité d'oxydes d'azote stockés dans le dispositif de piégeage catalytique 1.

L'invention permet d'améliorer la précision de l'estimation de la quantité d'oxydes d'azote stockés dans un dispositif de piégeage catalytiqué d'oxydes d'azote et d'améliorer le fonctionnement d'un système de régénération périodique d'un tel dispositif, à faible coût.

## Revendications

1. Système de régénération périodique d'un dispositif de piégeage catalytique (1) d'oxydes d'azote, comprenant une phase catalytique, et traversé par les gaz d'échappement (2) d'un moteur à combustion interne (3) de véhicule automobile (4), comprenant une unité de commande électronique (5) pourvue de moyens d'estimation (10) de la quantité instantanée d'oxydes d'azote piégée dans ladite phase catalytique lors du fonctionnement du moteur (3) en mélange pauvre en carburant, **caractérisé en ce qu'**il comprend, en outre, une cartographie (12) apte à déterminer une quantité instantanée d'oxydes d'azote éliminée de ladite phase catalytique, par désorption, lors du fonctionnement du moteur (3) en mélange pauvre en carburant, et évacuée dans les gaz d'échappement du véhicule.

2. Système selon la revendication 1, dans lequel ladite cartographie (12) comprend des paramètres d'entrée comprenant la température ($T_{\text{piège}}$) dans le dispositif de piégeage catalytique (1) et le débit ($Q_{\text{gaz}}$) de gaz traversant le dispositif de piégeage catalytique (1).

3. Système selon la revendication 2, dans lequel lesdits paramètres d'entrée de ladite cartographie (12) comprennent, en outre, des informations représentatives de l'empoisonnement au souffre et du vieillissement du dispositif catalytique (1).

4. Système selon l'une quelconque des revendications précédentes, comprenant un soustracteur (13) adapté pour soustraire ladite quantité instantanée déterminée d'oxydes d'azote éliminée de ladite phase catalytique par désorption, de la quantité instantanée estimée d'oxydes d'azote piégée dans ladite phase catalytique.

5. Procédé de régénération périodique d'un dispositif de piégeage catalytique (1) d'oxydes d'azote comprenant une phase catalytique, et traversé par les gaz d'échappement (2) d'un moteur à combustion interne (3) de véhicule automobile (4), dans lequel on estime la quantité instantanée d'oxydes d'azote piégée dans ladite phase catalytique lors du fonctionnement du moteur (3) en mélange pauvre en carburant, **caractérisé en ce que** l'on utilise une cartographie (12) pour déterminer une quantité instantanée d'oxydes d'azote éliminée de ladite phase catalytique, par désorption lors du fonctionnement du moteur (3) en mélange pauvre en carburant, et évacuée dans les gaz d'échappement du véhicule (4).

6. Procédé selon la revendication 5, dans lequel ladite cartographie (12) comprend des paramètres d'entrée comprenant la température ($T_{\text{piège}}$) dans le dispositif de piégeage catalytique et le débit ($Q_{\text{gaz}}$) de gaz traversant le dispositif de piégeage catalytique (1).

7. Procédé selon la revendication 6, dans lequel lesdits paramètres d'entrée de ladite cartographie comprennent, en outre, des informations représentatives de l'empoisonnement au souffre et du vieillissement du dispositif catalytique.

8. Procédé selon l'une quelconque des revendications 5 à 7, dans lequel on soustrait ladite quantité instantanée déterminée d'oxydes d'azote éliminée de ladite phase catalytique par désorption, de la quantité instantanée estimée d'oxydes d'azote piégée dans ladite phase catalytique.

**Claims**

1. System for the periodic regeneration of a nitrogen oxide catalytic trapping device (1), comprising a catalytic phase and through which there pass the exhaust gases (2) of an internal combustion engine (3) of a motor vehicle (4), comprising an electronic control unit (5) provided with estimating means (10) for estimating the instantaneous quantity of nitrogen oxides trapped in the said catalytic phase during lean-burn operation of the engine (3), **characterized in that** it further comprises a map (12) able to determine an instantaneous quantity of nitrogen oxides eliminated from the said catalytic phase, by desorption, during lean-burn operation of the engine (3) and discharged into the exhaust gases of the vehicle.

2. System according to Claim 1, in which the said map (12) comprises input parameters comprising the temperature ($T_{trap}$) in the catalytic trapping device (1) and the flow rate ($Q_{gas}$) of gas passing through the catalytic trapping device (1).

3. System according to Claim 2, in which the said input parameters for the said map (12) further comprise data representative of the sulphur poisoning and of the ageing of the catalytic device (1).

4. System according to any one of the preceding claims, comprising a subtractor (13) designed to subtract the said determined instantaneous quantity of nitrogen oxides eliminated from the said catalytic phase by desorption, from the estimated instantaneous quantity of nitrogen oxides trapped in the said catalytic phase.

5. Method for periodically regenerating a nitrogen oxide catalytic trapping device (1) comprising a catalytic phase and through which there pass exhaust gases (2) of an internal combustion engine (3) of a motor vehicle (4), in which method the instantaneous quantity of nitrogen oxides trapped in the said catalytic phase during lean-burn operation of the engine (3) is estimated, **characterized in that** use is made of a map (12) to determine an instantaneous quantity of nitrogen oxides eliminated from the said catalytic phase, by desorption, during lean-burn operation of the engine (3) and discharged in the exhaust gases of the vehicle (4).

6. Method according to Claim 5, in which the said map (12) comprises input parameters comprising the temperature ($T_{trap}$) in the catalytic trapping device and the flow rate ($Q_{gas}$) of gas passing through the catalytic trapping device (1).

7. Method according to Claim 6, in which the said input parameters for the said map further comprise data representative of the sulphur poisoning and of the ageing of the catalytic device.

8. Method according to any one of Claims 5 to 7, in which the said determined instantaneous quantity of nitrogen oxides removed from the said catalytic phase by desorption is subtracted from the estimated instantaneous quantity of nitrogen oxides trapped in the said catalytic phase.

**Patentansprüche**

1. System zur periodischen Regenerierung einer katalytischen Einfangvorrichtung (1) von Stickoxiden, die eine katalytische Phase enthält und von den Abgasen (2) eines Verbrennungsmotors (3) eines Kraftfahrzeugs (4) durchquert wird, das eine elektronische Steuereinheit (5) enthält, die mit Einrichtungen (10) zur Schätzung der beim Betrieb des Motors (3) mit magerem Kraftstoffgemisch in der katalytischen Phase eingefangenen augenblicklichen Menge von Stickoxiden versehen ist, **dadurch gekennzeichnet, dass** es außerdem ein Kennfeld (12) enthält, das eine augenblickliche Menge von Stickoxiden bestimmen kann, die beim Betrieb des Motors (3) mit magerem Kraftstoffgemisch durch Desorption aus der katalytischen Phase entfernt und in die Abgase des Fahrzeugs abgeführt wird.

2. System nach Anspruch 1, bei dem das Kennfeld (12} Eingangsparameter enthält, die die Temperatur ($T_{piège}$) in der katalytischen Einfangvorrichtung (1) und den Durchsatz ($Q_{gaz}$) von die katalytische Einfangvorrichtung (1) durchquerendem Gas enthalten.

3. System nach Anspruch 2, bei dem die Eingangsparameter des Kennfelds (12) außerdem für die Schwefelvergiftung und die Alterung der katalytischen Vorrichtung (1) repräsentative Informationen enthalten.

4. System nach einem der vorhergehenden Ansprüche, das ein Subtrahierglied (13) enthält, welches geeignet ist, um die bestimmte augenblickliche Menge von Stickoxiden, die durch Desorption aus der katalytischen Phase entfernt wird, von der in der katalytischen Phase eingefangenen geschätzten augenblicklichen Menge von Stickoxiden zu subtrahieren.

5. Verfahren zur periodischen Regenerierung einer katalytischen Einfangvorrichtung (1) von Stickoxiden, die eine katalytische Phase enthält und von den Abgasen (2) eines Verbrennungsmotors (3) eines Kraftfahrzeugs (4) durchquert wird, bei dem die beim Betrieb des Motors (3) mit magerem Kraftstoffgemisch in der katalytischen Phase eingefangene augenblickliche Menge von Stickoxiden geschätzt wird, **dadurch gekennzeichnet, dass** ein Kennfeld (12) verwendet wird, um eine beim Betrieb des Motors (3) mit magerem Kraftstoffgemisch durch Desorption aus der katalytischen Phase entfernte und in die Abgase des Fahrzeugs (4) abgeführte augenblickliche Menge von Stickoxiden zu bestimmen.

6. Verfahren nach Anspruch 5, bei dem das Kennfeld (12) Eingangsparameter enthält, die die Temperatur ($T_{piège}$) in der katalytischen Einfangvorrichtung und den Durchsatz ($Q_{gaz}$) von die katalytische Einfangvorrichtung (1) durchquerendem Gas enthalten.

7. Verfahren nach Anspruch 6, bei dem die Eingangsparameter des Kennfelds außerdem für die Schwefelvergiftung und die Alterung der katalytischen Vorrichtung repräsentative Informationen enthalten.

8. Verfahren nach einem der Ansprüche 5 bis 7, bei dem die bestimmte augenblickliche Menge von Stickoxiden, die durch Desorption aus der katalytischen Phase entfernt wird, von der in der katalytischen Phase eingefangenen geschätzten augenblicklichen Menge von Stickoxiden subtrahiert wird.

EP 1 957 768 B1

FIG.1

FIG.2

quantité instantanée NO$_x$ stockée

quantité instantanée NO$_x$ désorbée

Q gaz

Tpiège

quantité NO$_x$ stockée

Σ

FIG.3

EP 1 957 768 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2856741
- EP 503053 A
- EP 1503053 A